(19) Europäisches Patentamt
European Patent Office
Office européen des brevets

(11) **EP 2 843 807 A2**

## (12) EUROPEAN PATENT APPLICATION

(43) Date of publication:
**04.03.2015 Bulletin 2015/10**

(51) Int Cl.:
*H02K 3/28* $^{(2006.01)}$

(21) Application number: **13193415.0**

(22) Date of filing: **19.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.09.2013 EP 13182831**

(71) Applicant: **ALSTOM Technology Ltd**
**5400 Baden (CH)**

(72) Inventors:
• **Haldemann, Johann**
  **5242 Birr (CH)**
• **Gombert, Christophe**
  **90400 Vezelois (FR)**

(54) **Stator winding of a rotating electrical machine**

(57)     This 4.5 slots per pole and phase stator winding (20) comprises three phase windings (22, 24, 26) and is formed in a first layer (28) and a second layer (30) disposed in each slot ($18_1$-$18_{27}$) of a stator. Each phase winding (22, 24, 26) forms at least two phase belts (34) comprising several coils turns (36). Each coil turn (36) comprises a first connecting bar (42) belonging to the first layer (28) and a second connecting bar (44) belonging to the second layer (30). For at least two phase windings (22, 24, 26), some outermost connecting bars ($42_0$, $44_0$) of a group (46, 47) of first or second connecting bars (42, 44) of at least one phase belt (32, 34) are disposed in slots ($18_2$, $18_{10}$) which are separated from the slots ($18_4$-$18_7$, $18_6$-$18_8$) which accommodate at least two other connecting bars of the same group by one slot ($18_3$, $18_9$), which accommodates an innermost ($42_I$, $44_I$) connecting bar of another group of first or second connecting bars of another phase belt (32; 34) of another phase winding. A single first phase winding (22) comprises at least one phase belt (32, 34) for which, all the first (42) connecting bars are disposed in adjacent slots ($18_{12}$-$18_{16}$) and all the second (44) connecting bars are disposed in adjacent slots ($18_{23}$-$18_{27}$).

Fig.3

| Order number of slot 18 | Approximated electrical angular shift with respect to phase winding in slot 1 in first layer | |
| --- | --- | --- |
| | First layer 28 | Second layer 30 |
| $18_1$ | 0 | 300 |
| $18_2$ | 300 | 300 |
| $18_3$ | 0 | 300 |
| $18_4$ | 300 | 300 |
| $18_5$ | 300 | 240 |
| $18_6$ | 300 | 240 |
| $18_7$ | 300 | 240 |
| $18_8$ | 240 | 240 |
| $18_9$ | 240 | 180 |
| $18_{10}$ | 240 | 240 |
| $18_{11}$ | 240 | 180 |
| $18_{12}$ | 180 | 180 |
| $18_{13}$ | 180 | 180 |
| $18_{14}$ | 180 | 120 |
| $18_{15}$ | 180 | 120 |
| $18_{16}$ | 180 | 120 |
| $18_{17}$ | 120 | 120 |
| $18_{18}$ | 120 | 60 |
| $18_{19}$ | 120 | 120 |
| $18_{20}$ | 60 | 60 |
| $18_{21}$ | 120 | 60 |
| $18_{22}$ | 60 | 60 |
| $18_{23}$ | 60 | 0 |
| $18_{24}$ | 60 | 0 |
| $18_{25}$ | 60 | 0 |
| $18_{26}$ | 0 | 0 |
| $18_{27}$ | 0 | 0 |

EP 2 843 807 A2

**Description**

The present invention concerns a stator winding of a rotating electrical machine including a rotor and a stator, which has slots on his peripheral area facing the rotor.

For some electrical machines, the stator winding comprises three phases and is formed in two layers for each slot. One layer corresponds to a part of the stator winding disposed into the bottom of each slot and the other to another part of the stator winding disposed into the top of each slot. Such a stator winding includes a phase winding for each phase.

The number of slots is important for setting a voltage in a stator winding. It is known that, when the number of poles is high for an integer number of slots per pole and phase stator, the number of necessary slots is high, which induces a lack of flexibility in the stator design. In order to overcome this issue, it is known to design a stator with a fractional number of slots per pole and phase.

The present invention considers rotating electrical machines having this kind of stator design and, more precisely, 4.5 slots per pole and phase.

More generally, in a rotating electrical machine, a magnetic flux generates an electromagnetic force to attract the stator core towards the rotor and this electromagnetic force generates circular vibrations when the rotor rotates. The magnetic flux density B generated by the stator winding is proportional to the stator winding current. The magnetic flux density is expressed as follows:

$$B(\theta,t) = \sum_{\nu=1,4,7,10...}(\mathrm{B}_\nu.\cos(\nu.\mathrm{p}.\theta - \omega.\mathrm{t})) + \sum_{\nu=2,5,8,11...}(\mathrm{B}_\nu.\cos(\nu.\mathrm{p}.\theta + \omega.\mathrm{t})) \qquad \text{(Equation 1)}$$

with $\theta$: machine angle, p: number of poles pairs, $\nu$ : space harmonic component ranking, w: electrical pulsation, t: time.

As observed in equation 1, space harmonic components of a multiple of 3 are usually cancelled in three-phased machines.

As the electromagnetic force is proportional to the square of the magnetic flux density B, an electromagnetic force is generated by the magnetic flux and becomes an excitation force having a frequency double the electrical frequency.

For an integer number of slots per pole and phase machine, the even-ordered space harmonic components of the magnetic flux do not exist. Therefore an electromagnetic excitation force F acting on a stator core is expressed as follows, if one keeps only the most important components function of $B_1$ ($B_\nu$ of Equation 1 with $\nu=1$, corresponding to the fundamental component).

$$F(\theta,t) \approx \frac{B_1^2}{2}\cos(2.\mathrm{p}.\theta - 2.\omega.\mathrm{t}) + \mathrm{B}_1.\mathrm{B}_5.\cos(4.\mathrm{p}.\theta + 2.\omega.\mathrm{t}) + \mathrm{B}_1.\mathrm{B}_7.\cos(8.\mathrm{p}.\theta - 2.\omega.\mathrm{t}) + ...$$

(Equation 2)

In equation 2, the term $\dfrac{B_1^2}{2}\cos(2.\mathrm{p}.\theta - 2.\omega.\mathrm{t})$ represents the fundamental component of the electromagnetic excitation force and corresponds to a 4.p nodes vibration mode (i.e. equal to 8 nodes for p=2), where p is the number of poles pairs, as mentioned above.

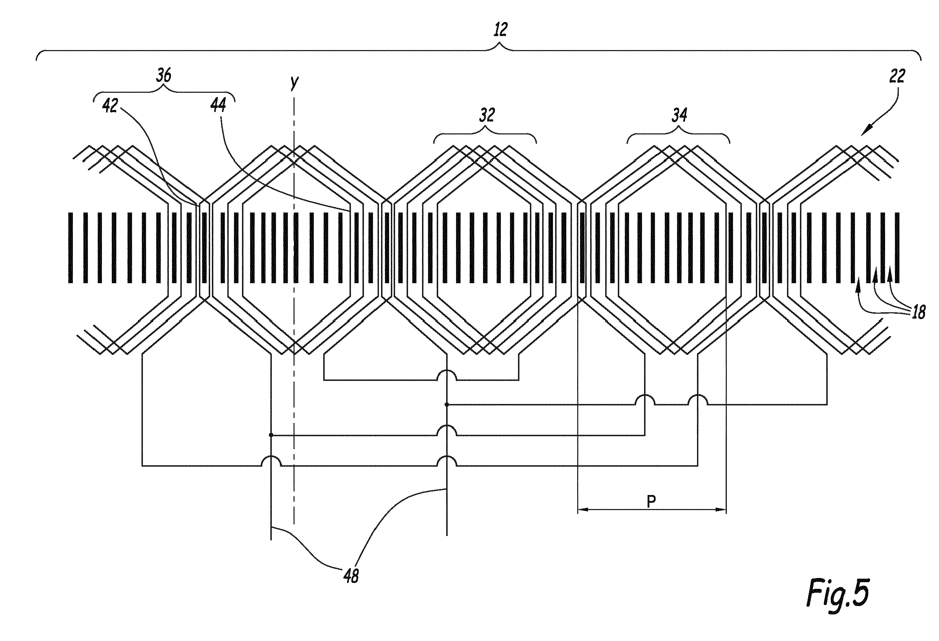

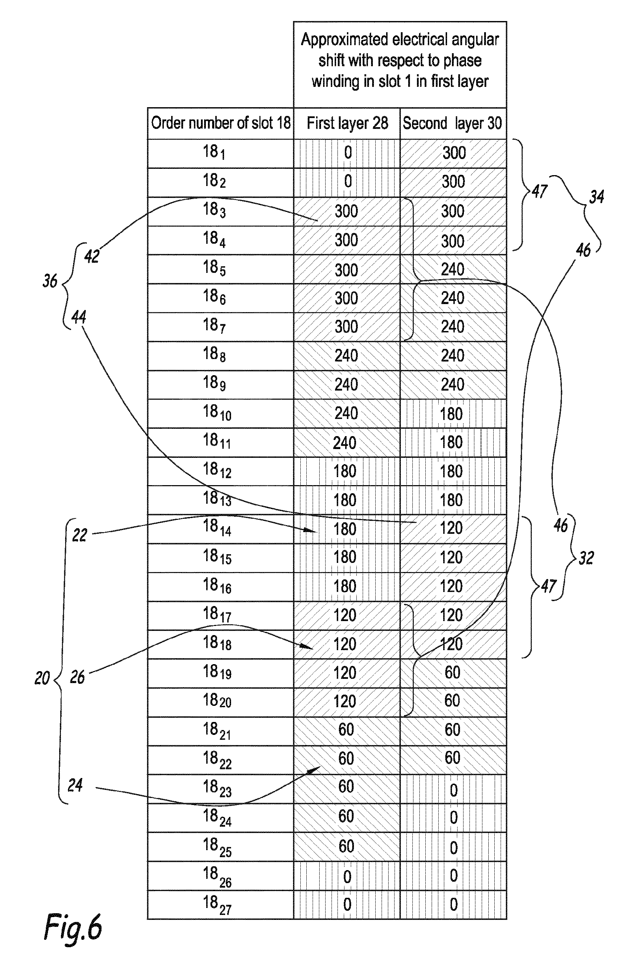

Figure 5 schematically shows a stator 12, and more precisely one phase winding 22 of a stator winding 20 represented on figure 6 of a conventional rotating electrical machine having 4.5 slots 18 per pole and phase. Generally the stator winding 20 includes three phase windings 22, 24, 26 on two layers 28, 30 represented on figure 6. On figure 6 twenty seven slots 18 are represented, namely slots with order numbers $18_1$ to $18_{27}$, with $18_1$ corresponding to the first slot.

Generally speaking, in this description, the index i corresponding to the $i^{th}$ slot. So slots $18_i$ is also called "slot number i" with i the index of the order number of the slot.

A rotating electrical machine having 4.5 slots per pole and per phase can be obtained, for example, with the configuration of fifty four slots with four poles or twenty seven slots with two poles. The windings arrangements presented on figure 6 in slots numbers $18_1$ to $18_{27}$ can be repeated on slots $18_{28}$ to $18_{54}$ in the same order to obtain the winding with fifty four slots.

Phase winding 22 forms two different types of phase belts 32, 34, namely 5-coil turn phase belt 32 and 4-coil turn phase belt 34, which are alternatively arranged in a circumferential direction of stator 12. Each phase belt 32, 34 comprises coil turns 36, and each coil turn 36 includes two connecting bars 42, 44. A first connecting bar 42 belongs to a first layer 28 and a second connecting bar 44 belongs to a second layer 30. First connecting bar 42 and second connecting bar 44 are separated for each coil turn 36 by a predetermined pitch P, corresponding to a number of slots 18. On the example shown on Figure 5, the pitch is set to eleven slots.

On figure 6, twenty seven slots $18_i$, the three phase windings 22, 24, 26, and the two layers 28, 30 are represented with a table. The different phase windings are identified with different kinds of hatchings and the two right columns correspond respectively to first layer 28 and second layer 30. To each slot 18 and each layer 28 or 30, the table of figure 6 associates a phase winding represented with the hatchings and a number corresponding to the approximated electrical angular shift of this phase winding with respect to phase winding 22 in slot $18_1$, in first layer 28. It has to be noticed that each coil turn 36 of the first winding 22 includes a first connecting bar 42 and a second connecting bar 44 for which the angular shift is equal to 0° or 180°. The same applies for coils turns 36 of second 24 and third 26 phase windings with angular shift of respectively 60° or 240°, for the second phase winding 24, and of 120° or 300°, for the third phase winding 26.

Alternatively, the position of each phase winding 22, 24, 26 could be switched on figure 8. For example, the position of phase winding 24 and phase winding 26 could be switched.

As shown on figure 6 for phase winding 26, all first connecting bars 42 of one phase belt 32 are disposed in adjacent slots 18, namely slots number $18_3$ to $18_7$. Similarly, all second connecting bars 44 of phase belt 32 are disposed in adjacent slots $18_{14}$ to $18_{18}$. Moreover, first 42 and second 44 connecting bars of phase belt 34 are respectively disposed in adjacent slots $18_{17}$ to $18_{20}$ and $18_1$ to $18_4$. A similar arrangement is used for phase windings 22 and 24.

Phase belts 32, 34 are disposed in slots 18 with a double alternation. More precisely, phase belts 32, 34 of phase windings 22, 24, 26 alternate with an alternation of 5-coil turn phase belt 32 and 4-coil turn phase belt 34.

Thus, with a conventional rotating electrical machine having 4.5 slots per pole and phase, the symmetry is not established for each magnetic pole, and an even-ordered space harmonic component of the magnetic flux is higher than zero. Consequently, in this case, an electromagnetic excitation force F acting on a stator core is expressed as follows:

$$F(\theta,t) \approx \frac{B_1^2}{2}\cos(2.p.\theta - 2.\omega.t) + B_1.B_2.\cos(p.\theta + 2.\omega.t) + B_1.B_5.\cos(4.p.\theta + 2.\omega.t) +$$
$$B_1.B_4.\cos(5.p.\theta - 2.\omega.t) + ...$$

(Equation 3)

Here, a 2.p component appears as a lowest order electromagnetic excitation force and corresponds to the term: $B_1.B_2.\cos(p.\theta + 2.\omega.t)$.

2.p component corresponds to a 2.p node excitation vibration mode, which has a negative influence on the functioning of the machine. Indeed, for a 4-pole machine the 2.p node excitation mode corresponds to a 4-node excitation vibration mode and, for a 2-pole, machine it corresponds to a 2-node excitation vibration mode. These two excitation vibration modes create excessive stator core vibrations.

It appears that, with a fractional number of slots per pole and phase, the electromagnetic force F includes more harmonics than with an integer number of slots per pole and phase, but they have often lower amplitudes.

Furthermore, it is known from EP-A-2 503 673 to use a 3-phase 4-pole 2-layer stator winding of rotating electrical machine having fifty-four slots, allowing the reduction of the 2.p node excitation mode. In such a stator winding, the main idea, as compared with the conventional rotating electrical machine shown on figures 5 and 6, is to interchange one connecting bar in a phase belt of each phase with the corresponding connecting bar of an adjacent phase winding. Therefore connecting bars are interchanged in the same way for each phase. Even if such a solution allows reducing the 2.p node excitation mode, the reduction is not optimized and creates also high rotor surface losses.

So, the aim of this invention is to provide a stator winding of a rotating electrical machine where the number of slots per pole and phase is fractional, the reduction of an electromagnetic excitation force of a 2.p component is optimized, the stator and rotor losses are limited, vibrations of the stator are highly decreased and the reliability of the machine is increased.

To this end, the invention concerns a 4.5 slots per pole and phase stator winding of a rotating electrical machine, comprising a rotor and a stator with slots distributed around a rotation axis of the rotor, the stator winding comprising three phase windings and being formed, in each slot, of a first layer and a second layer each phase winding forming at least two phase belts, each phase belt comprising several coils turns connected in series and defining a central axis of the phase belt, each coil turn comprising two connecting bars, with a first connecting bar belonging to the first layer and a second connecting bar belonging to the second layer, whereas:

- the first connecting bars of each phase belt form a group of first connecting bars comprising an outermost first connecting bar, which is further from the central axis of this phase belt than the other first connecting bars of the same group and an innermost first connecting bar which is closer to the central axis than the other first connecting bars of the same group;
- the second connecting bars of each phase belt form a group of second connecting bars comprising an outermost second connecting bar, which is further from the central axis of this phase belt than the other second connecting bars of the same group and an innermost second connecting bar which is closer to the central axis than the other second connecting bars of the same group.

According to the invention, for at least two phase windings:

- an outermost first connecting bar of a group of first connecting bars of at least one phase belt is disposed in a slot which is separated from the slots, which accommodate at least two other first connecting bars of the same group, by one slot, which accommodates an innermost first connecting bar of another group of first connecting bars of another phase belt of another phase winding, and
- an outermost second connecting bar of a group of second connecting bars of at least one phase belt is disposed in a slot which is separated from the slots, which accommodate at least two other second connecting bars of the same group, by one slot, which accommodates an innermost second connecting bar of another group of second connecting bars of another phase belt of another phase winding,

whereas a single first phase winding comprises at least one phase belt for which:

- all the first connecting bars are disposed in adjacent slots and
- all the second connecting bars are disposed in adjacent slots.

Thanks to the invention, the disposition of the phase windings explained above allows optimizing the reduction of the 2.p node excitation mode, with p the number of poles pairs. Working conditions and the reliability of a rotating electrical machine comprising such a stator winding are optimized.

According to further aspects of the invention which are advantageous but not compulsory, such a 4.5 slots per pole and phase stator winding may incorporate one or several of the following features:

- the two phase belts are respectively a 5-coil turn phase belt and a 4-coil turn phase belt, whereas each 5-coil turn phase belt of said single phase winding has all its first connecting bars disposed in adjacent slots and all its second connecting bars disposed in adjacent slots ;
- for each 5-coil turn phase belt of a second phase windings and a third phase winding different from the single first phase winding, the outermost first connecting bar is disposed in a slot which is separated from the slots, which accommodate four other first connecting bars of the same group, by one slot, which accommodates an innermost first connecting bar of another group of first connecting bars of a 4-coil turn phase belt of another phase winding, and the outermost second connecting bar is disposed in a slot which is separated from the slots, which accommodate four other second connecting bars of the same group, by one slot, which accommodates an innermost second connecting bar of another group of second connecting bars of a 4-coil turn phase belt of another phase winding ;
- the first and second connecting bars are separated, for at least each coil turn comprising a first connecting bar and a second connecting bar of one phase winding in a respective slot adjacent with respectively at least one slot comprising a first connecting bar and a second connecting bar of the same phase winding, by a global coil pitch corresponding to a number of slots equal to 11 ;

- the two phase belts are respectively a 5-coil turn phase belt and a 4-coil turn phase belt, whereas each 4-coil turn phase belt of said single phase winding has all its first connecting bars disposed in adjacent slots and all its second connecting bars disposed in adjacent slot ;
- for each 5-coil turn phase belt of first phase winding the outermost first connecting bar is disposed in a slot which is separated from the slots, which accommodate four other first connecting bars of the same group, by one slot, which accommodates an innermost first connecting bar of another group of first connecting bars of a 4-coil turn phase belt of another phase winding, and the outermost second connecting bar is disposed in a slot which is separated from the slots, which accommodate four other second connecting bars of the same group, by one slot, which accommodates an innermost second connecting bar of another group of second connecting bars of a 4-coil turn phase belt of another phase winding. Moreover, for each 5-coil turn phase belt of a second phase winding different from the first phase winding the outermost first connecting bar is disposed in a slot which is separated from the slots, which accommodate four other first connecting bars of the same group, by one slot, which accommodates an innermost first connecting bar of another group of first connecting bars of a 4-coil turn phase belt of another phase winding, and the innermost second connecting bar is disposed in a slot which is separated from the slots, which accommodate four other second connecting bars of the same group, by one slot, which accommodates an outermost second connecting bar of another group of second connecting bars of a 4-coil turn phase belt of another phase winding. Finally, for each 5-coil turn phase belt of a third phase winding different from the first and second phase windings the outermost second connecting bar is disposed in a slot which is separated from the slots, which accommodate four other second connecting bars of the same group, by one slot, which accommodates an innermost second connecting bar of another group of second connecting bars of a 4-coil turn phase belt of another phase winding, and the innermost first connecting bar is disposed in a slot which is separated from the slots, which accommodate four other first connecting bars of the same group, by one slot, which accommodates an outermost first connecting bar of another group of first connecting bars of a 4-coil turn phase belt of another phase winding ;

- the first and second connecting bars are separated, for at least each coil turn comprising a first connecting bar and a second connecting bar of one phase winding in a respective slot adjacent with respectively at least one slot comprising a first connecting bar and a second connecting bar of the same phase winding, by a global coil pitch corresponding to a number of slots equal to 12 ;
- the first layer corresponds to a portion of the stator winding disposed in the bottom of the slots and second layer corresponds to another portion of the stator winding disposed in the top of the slots, or conversely.

The invention will now be explained in correspondence with the annexed figures, and as an illustrative example, without restricting the object of the invention. In the annexed figures:

- figure 1 is a cross section of a rotating electrical machine having a stator winding according to the invention;
- figure 2 is a developed schematic view showing one phase winding of a stator winding of a rotating electrical machine according to a first embodiment;
- figure 3 is a table representing in a schematic way the position of the different phase windings for a stator winding according to the first embodiment;
- figure 4 is a table similar to figure 3 for a stator winding according to a second embodiment;
- figure 5 is a developed schematic view showing one phase winding of a stator winding of a conventional rotating electrical machine; and
- figure 6 is a table similar to figure 3 for the winding of figure 5.

For each embodiment of the invention and the conventional machine, the same references are used and correspond to the same elements.

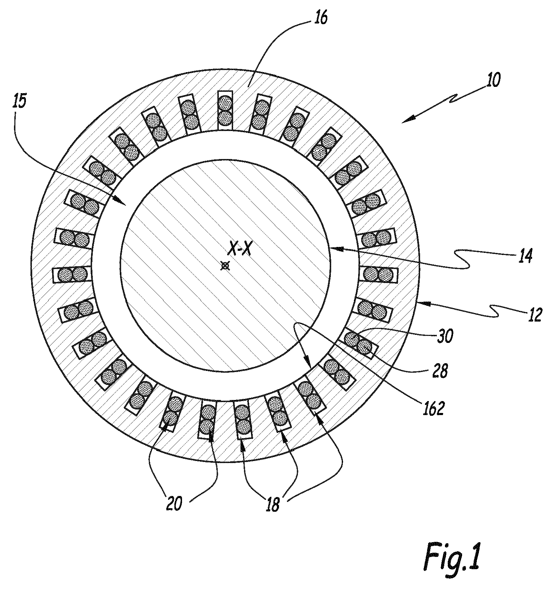

Figure 1 partially represents a rotating electrical machine 10. The electrical machine 10 includes a stator 12 and a rotor 14 disposed coaxially with respect to an axis X-X of rotation of the rotor 14. The stator 12 surrounds the rotor 14 and an annular gap 15 is formed between the rotor 14 and the stator 12.

The stator 12 includes an armature core 16. Some slots 18 are regularly disposed along an internal face 162 of armature core 16, around axis X-X. Slots 18 are intended to receive a stator winding 20 which conveys three phases.

The stator 12 includes twenty seven slots 18 and in the electrical machine 10 includes two poles. So, the electrical machine 10 includes a stator 12 with 27 / (2x3) = 4.5 slots 18 per pole and phase.

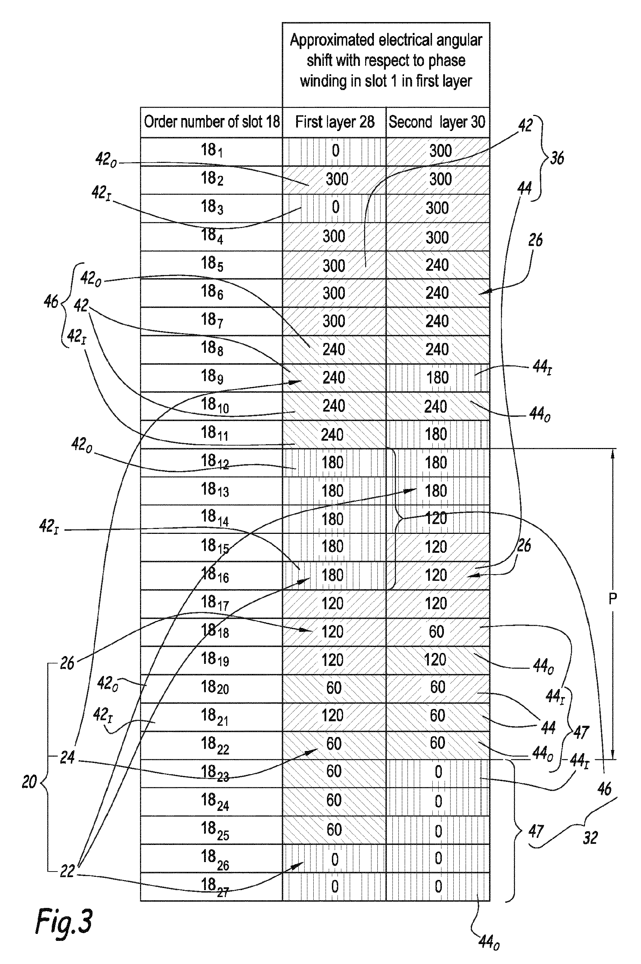

The stator winding 20 includes three different phase windings, 22, 24, 26, represented on figure 3 and corresponding to a first 22, a second 24 and a third 26 phase windings conveying the three different phases. On figure 3, first phase winding 22 is represented with vertical hatchings, second phase winding 24 is represented with diagonal hatchings inclined of 45° on the left compared to the vertical hatchings, and third phase winding 26 is represented with diagonal hatchings inclined of 45° on the right compared to the vertical hatchings. Stator winding 20 is also divided in a first layer 28 and a second layer 30, which go through all slots 18.

Each first 22, second 24 and third 26 winding forms phase belts 32, 34, and each phase belt 32, 34 includes several coil turns 36 connected in series, which define a central axis Y of the phase belt. More precisely, there are two different types of phase belts 32, 34, 5-coil turn phase belt 32 and 4-coil turn phase belt 34.

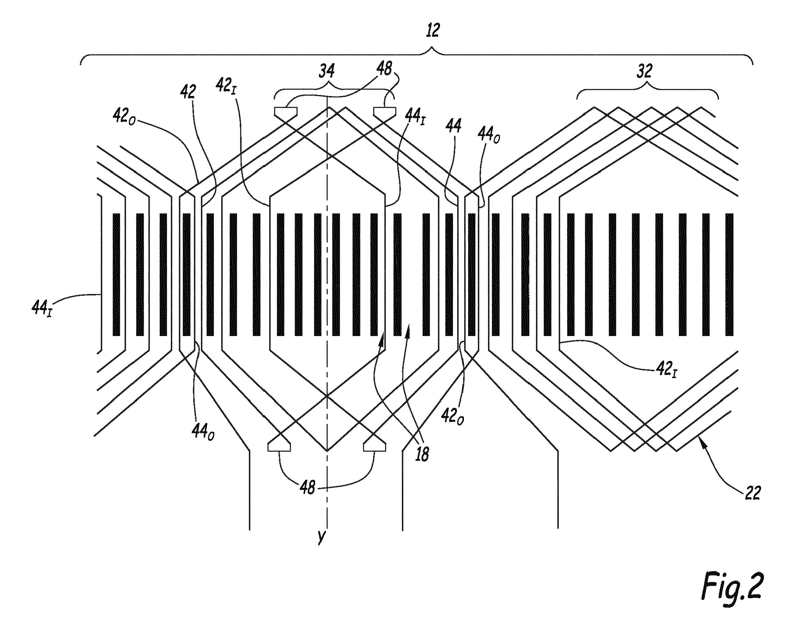

For the sake of clarity, phase windings 24 and 26 are omitted on figure 2. Thus, figure 2 shows phase winding 22 only. As shown for phase belt 34, the central axis Y of a phase belt is an axis parallel to slots 18 and median between the two connecting bars of this phase belt separated by the largest distance measured perpendicularly to slots 18.

In the examples of figures 1 to 4, the first layer 28 corresponds to a portion of the stator winding 20 placed in the bottom of the slots 18 and the second layer 30 to another portion of the stator winding 20 placed in the top of slots 18, next to face 162.

According to a non-represented variant of the invention, first layer 28 corresponds to a portion of stator winding 12 placed in the top of slots 18 and second layer 30 to another portion of stator winding 12 placed in the bottom of slots 18.

Each coil turn 36 includes two connecting bars 42, 44, a first connecting bar 42 belonging to first layer 28 and a second connecting bar 44 belonging to second layer 30. The ends of the first 42 and second 44 connecting bars are connected in series in order to form coil turn 36. First 42 and second 44 connecting bars of one coil turn 36 are separated from each other by a predetermined coil pitch P, corresponding to a number of slots 18.

As shown on figures 2 and 3 the first connecting bars 42 of each phase belt 32, 34 form a group of first connecting bars comprising an outermost first connecting bar $42_O$ which is further from the central axis Y of this phase belt 32, 34 than the other first connecting bars 42 of the same group and an innermost first connecting bar $42_1$ which is closer to the central axis than the other first connecting bars 42 of the same group. For example, the first connecting bars in slots $18_{12}$, $18_{13}$, $18_{14}$, $18_{15}$, $18_{16}$ form a group 46 of first connecting bars of a 5-coil turn phase belt 32. The outermost first connecting bar $42_O$ of this group 46 is in slot $18_{12}$ and the innermost first connecting bar $42_I$ is in slot $18_{16}$.

The second connecting bars 44 of each phase belt 32, 34 form a group of second connecting bars comprising an outermost second connecting bar $44_O$, which is further from the central axis Y of this phase belt 32, 34 than the other second connecting bars 44 of the same group and an innermost second connecting bar $44_I$ which is closer to the central axis Y than the other second connecting bars 44 of the same group. For example, the second connecting bars 44 in slots $18_{23}$, $18_{24}$, $18_{25}$, $18_{26}$, $18_{27}$ form a phase group 47 of second connecting bars of a 5-coil turn phase belt 32. The outermost second connecting bar $44_O$ is in slot $18_{27}$ and the innermost first connecting bar $44_I$ is in slot $18_{23}$.

Therefore, in figure 3, each 5-coil turn phase belt 32 of the first phase winding 22 has all its first connecting bars 42 disposed in adjacent slots $18_{12}$ to $18_{16}$ and all its second connecting bars 44 disposed in adjacent slots $18_{23}$ to $18_{27}$.

Furthermore, for each 5-coil turn phase belt 32 of the second phase winding 24 and the third phase winding 26, the outermost first connecting bars $42_0$ are respectively disposed in the slots $18_{20}$, $18_2$ which are respectively separated from the slots $18_{22}$ to $18_{25}$ and $18_4$ to $18_7$, which accommodate four other first connecting bars 42 of the same group, by one slot, respectively $18_2$, $18_3$, which accommodates an innermost first connecting bar $42_I$ of another group of first connecting bars of the 4-coil turn phase belt 34 of, respectively, the third 26 and the second 22 phase windings.

Moreover, for each 5-coil turn phase belt 22 of the second phase winding 24 and the third winding 26, the outermost second connecting bars $44_0$ are respectively disposed in the slots $18_{10}$, $18_{19}$ which are respectively separated from the slots $18_5$ to $18_8$ and $18_{14}$ to $18_{17}$, which accommodate four other second connecting bars 44 of the same group, by one slot, respectively $18_9$, $18_{18}$, which accommodates respectively the innermost second connecting bar $44_I$ of another group of second connecting bars 34 of the 4-coil turn phase belt of, respectively, the first 22 and the second 24 phase windings.

As shown on figure 2, for a 4-coil turn phase belt 34 of the first phase winding 22, specific clips 48 are used to connect the innermost first $42_I$ connecting bar, on one hand, to the outermost second $44_O$ connecting bar, on the other hand, to another second connecting bar 44. Specific clips 48 are also used to connect the innermost second connecting bar $44_I$, on one hand, to the outermost first connecting bar $42_O$, on the other hand, to another first connecting bar 42.

More generally, each outermost or innermost, first or second connecting bars $42_I$, $42_O$, $44_I$, $44_O$ which is separated from some slots which accommodate at least two respectively first 42 or second 44 connecting bars of the same group, by one slot which accommodates respectively a connected first 42 or second 44 connecting bar of another group, is connected to the corresponding second or first connecting bars using a specific clip 48, in order to have coil turns 36 connected in series for each phase belt 32, 34.

On figure 2 the connexion between the phase belt of the first phase winding 22 are not represented but can be realised in different manners. For example, the 5-coil turn phase belt 32 and the 4-coil turn phase belt 34 are connected in series.

On figures 2 and 3 the global coil pitch P between the first connecting bars 42 and the second connecting bar 44 is globally set to eleven. More precisely, the global coil pitch P is set to eleven slots for each coil turn 36 comprising a first connecting bar 42 and a second connecting bar 44 of the first phase winding 22 located in a respective slot adjacent with respectively at least one slot comprising a first connecting bar 42 and a second connecting bar 44 of the first phase winding 22. The same applies for each coil turn 36 comprising a first connecting bar 42 and a second connecting bar 44 of the second 24 and third 26 phase windings.

The global pitch P is fixed to eleven slots in order to reduce the lowest order electromagnetic excitation force corresponding to the term: $B_1.B_2.\cos(p.\theta+2.\omega.t)$, as explained in relation to equation 3.

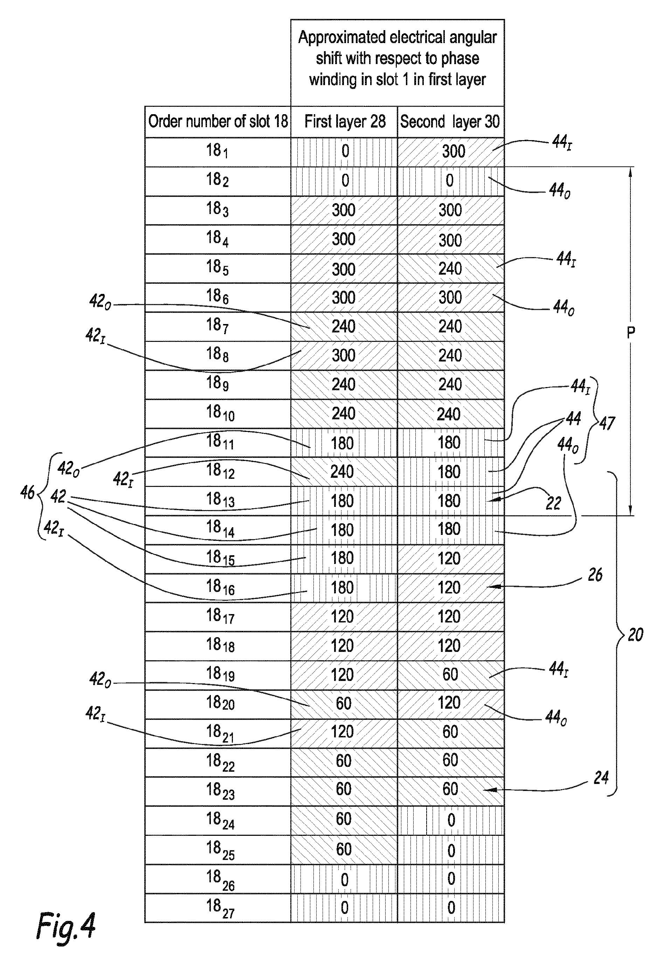

In the second embodiment represented on figure 4, the global coil pitch P, defined as above between the first connecting bars 42 and the second connecting bar 44 of each coil turn 36, is globally set to twelve.

In the second embodiment of figure 4, the 4-coil turn phase belt 34 of the first phase winding 22 has all its first connecting bars 42 disposed in adjacent slots $18_{26}$, $18_{27}$, $18_1$, $18_2$, and all its second connecting bars 44 disposed in adjacent slot $18_{11}$ to $18_{14}$.

For each 5-coil turn phase belt 32 of the first phase winding 22:

- the outermost first connecting bar $42_0$ is disposed in the slot $18_{11}$ which is separated from the slots $18_{13}$ to $18_{16}$, which accommodate four other first connecting bars 42 of the same group, by the slot $18_{12}$, which accommodates an innermost first connecting bar $42_I$ of another group of first connecting bars 42 of the 4-coil turn phase belt 34 of the second phase winding 24, and

- the outermost second connecting bar $42_0$ is disposed in the slot $18_2$ which is separated from the slots $18_{14}$ to $18_{27}$, which accommodate four other second connecting bars 44 of the same group, by the slot $18_1$ which accommodates an innermost second connecting bar $44_I$ of another group of second connecting bars of the 4-coil turn phase belt 34 of the third phase winding 26,

Moreover, for each 5-coil turn phase belt 32 of the second phase winding 24:

- the outermost first connecting bar $42_0$ is disposed in the slot $18_{20}$ which is separated from the slots $18_{22}$ to $18_{25}$, which accommodate four other first connecting bars 42 of the same group, by the slot $18_{21}$, which accommodates an innermost first connecting bar $42_I$ of another group of first connecting bars of the 4-coil turn phase belt 34 of the third phase winding 26, and
- the innermost second connecting bar $44_I$ is disposed in the slot $18_5$, which is separated from the slots $18_7$ to $18_{10}$ which accommodate four other second connecting bars of the same group, by the slot $18_6$, which accommodates an outermost second connecting bar $42_0$ of another group of second connecting bars of the 4-coil turn phase belt 34 of the third phase winding 26,

Furthermore, for each 5-coil turn phase belt 32 of the third phase winding 26:

- the outermost second connecting bar $44_0$ is disposed in the slot $18_{20}$, which is separated from the slots $18_{15}$ to $18_{18}$, which accommodate four other second connecting bars of the same group, by the slot $18_{19}$, which accommodates an innermost second connecting bar $44_I$ of another group of second connecting bars of a 4-coil turn phase belt of the second phase winding 24, and
- the innermost first connecting bar $42_I$ is disposed in a slot $18_8$ which is separated from the slots $18_3$ to $18_6$ which accommodate four other first connecting bars of the same group, by one slot $18_7$, which accommodates an outermost first connecting bar $42_0$ of another group of first connecting bars 42 of the 4-coil turn phase belt 34 of the second phase winding 24.

Alternatively, in non represented third and fourth embodiments, the stator 12 could include, on its internal face, fifty-four slots, which implies that the stator 12 would comprise four poles. In these embodiments, one 5-coil turn phase belt and one 4-coil turn phase belt of a same phase are connected in series and two sets of circuit including series-connected 5-coil turn phase belt and 4-coil turn phase belt are generally connected in parallel and form a phase winding. More precisely, in the third and fourth embodiments, the arrangement of the connecting bars correspond respectively to the one presented on figure 3 and on figure 4 repeated twice.

More generally the invention concerns all stator windings 20 with 4.5 slots 18 per pole and phase.

In the four embodiments, a coil turn 36 which includes a first connecting bar 42 or a second connecting bar 44 of one phase winding in a respective slot which is adjacent to two slots comprising two first connecting bars of respectively two second connecting bars 44 of a different phase winding 22, 24, 26 has generally a coil pitch P different compared to the desired global coil pitch.

Table 1 shows the relationship between the coil pitch P and the four node excitation vibration mode for the third embodiment and for the prior art, for a fifty-four slots stator. Table 1 indicates also the rotor surface losses.

Table 1 relationship between coil pitch four node excitation and rotor losses for different embodiments:

| Embodiment/coil pitch | Four-node excitation level | Rotor surface losses |
|---|---|---|
| Conventional machine with P= 11 | 100% | 100% |
| Conventional machine with P= 12 | 82% | 261% |
| Third embodiment with P=11 | 39% | 172% |

It appears that the second order space harmonic which generates the four node excitation is reduced and a reliable stator is provided with the third embodiment compared to the conventional machine stator winding 20 shown in figures 5 and 6. Similar results are obtained for the first embodiment.

However, if we compare the results for the third embodiment and the conventional machine stator winding 20, it appears that the rotor surface losses due to the eddy current losses on the rotor 14 surface are higher with a low 4-node excitation level. It means that the winding harmonics which create these losses are increased. But the third embodiment allows to highly decrease 4-node excitation mode.

In the first, second, third, and fourth embodiments the coil turns arrangement is no more symmetrical because the arrangements of connecting bars 42, 44 is different according to the phase windings 22, 24, 26. These asymmetrical arrangements could create a slight unbalance of the unloaded machine voltage and also a slight unbalance of the phase current when the machine is loaded. The estimated unbalances are low. Therefore the functioning of an electrical machine comprising the stator winding 20 according to the first, second, third and fourth embodiments is optimized and vibrations are reduced.

The invention allows to optimize the reduction of the 2.p node excitation mode, with p the number of poles pairs. Therefore the stator losses are limited, the vibrations of the stator are highly decreased, and the reliability of the electrical machine comprising stator winding 20 is increased.

According to a non-represented variant of the invention, first layer 28 corresponds to a portion of stator winding 12 placed in the top of slots 18 and second layer 30 to another portion of stator winding 12 placed in the bottom of slots 18.

Alternatively, in the different embodiments, the position of each phase winding 22, 24, 26 in the different slots 18 could be switched. For example, the position of phase winding 24 and phase winding 26 could be switched.

The slot numbering is given as an example and is not limiting for the invention and the different embodiments.

The embodiments and variants of the invention considered here-above can be combined in order to generate new embodiments of the invention.

**Claims**

1. 4.5 slots per pole and phase stator winding (20) of a rotating electrical machine (10), comprising a rotor (14) and a stator (12) with slots (18) distributed around a rotation axis (X-X) of the rotor (14), the stator winding (20) comprising three phase windings (22, 24, 26) and being formed, in each slot, of a first layer (28) and a second layer (30) each phase winding (22, 24, 26) forming at least two phase belts (32, 34), each phase belt comprising several coils turns (36) connected in series and defining a central axis (Y) of the phase belt, each coil turn (36) comprising two connecting bars (42, 44), with a first connecting bar (42) belonging to the first layer (28) and a second connecting bar (44) belonging to the second layer (30), whereas:

   - the first connecting bars (42) of each phase belt (32, 34) form a group (46) of first connecting bars comprising an outermost first connecting bar ($42_O$), which is further from the central axis (Y) of this phase belt than the other first connecting bars of the same group and an innermost first connecting bar ($42_I$) which is closer to the central axis than the other first connecting bars of the same group;
   - the second connecting bars (44) of each phase belt (32, 34) form a group (47) of second connecting bars comprising an outermost second connecting bar ($44_0$), which is further from the central axis (Y) of this phase belt than the other second connecting bars of the same group and an innermost second connecting bar ($44_I$) which is closer to the central axis than the other second connecting bars of the same group;

   said winding (20) being **characterized in that**, for at least two phase windings (22, 24, 26):

   - an outermost first connecting bar ($42_0$) of a group (46) of first connecting bars of at least one phase belt (32, 34) is disposed in a slot ($18_2$; $18_{11}$) which is separated from the slots ($18_4$-$18_7$; $18_{13}$-$18_{16}$), which accommodate at least two other first connecting bars (42) of the same group, by one slot ($18_3$; $18_{12}$;), which accommodates an innermost ($42_I$) first connecting bar of another group (46) of first connecting (42) bars of another phase belt (32; 34) of another phase winding, and
   - an outermost second connecting bar ($44_0$) of a group (47) of second connecting bars of at least one phase belt (32, 34) is disposed in a slot ($18_{10}$; $18_2$) which is separated from the slots ($18_5$-$18_8$; $18_{24}$-$18_{27}$), which accommodate at least two other second connecting bars of the same group, by one slot ($18_9$; $18_1$), which accommodates an innermost ($44_I$) second connecting bar of another group (47) of second connecting bars of another phase belt (32; 34) of another phase winding (22; 24; 26),

   and **in that** a single first phase winding (22) comprises at least one phase belt (32, 34) for which :

   - all the first (42) connecting bars are disposed in adjacent slots ($18_{12}$-$18_{16}$, $18_1$, $18_2$, $18_{26}$, $18_{27}$) and
   - all the second (44) connecting bars are disposed in adjacent slots ($18_{23}$-$18_{27}$; $18_{11}$-$18_{14}$).

2. A stator winding according to claim 1, **characterized in that** the two phase belts are respectively a 5-coil turn phase belt and a 4-coil turn phase belt, and **in that** each 5-coil turn phase belt (32) of said single phase winding (22) has all its first connecting bars (42) disposed in adjacent slots ($18_{12}$-$18_{16}$) and all its second connecting bars (44) disposed

in adjacent slots ($18_{23}$-$18_{27}$).

3. A stator winding according to claim 2, **characterized in that** for each 5-coil turn phase belt (32) of a second phase windings (24) and a third phase winding (26) different from the single first phase winding (22):

- the outermost first connecting bar ($42_0$) is disposed in a slot ($18_{20}$; $18_2$) which is separated from the slots ($18_{22}$-$18_{25}$, $18_4$-$18_7$), which accommodate four other first connecting bars of the same group, by one slot ($18_{21}$, $18_3$), which accommodates an innermost ($42_I$) first connecting bar of another group (46) of first connecting bars of a 4-coil turn phase belt (34) of another phase winding (26; 22), and
- the outermost second connecting bar ($44_0$) is disposed in a slot ($18_{10}$, $18_{19}$) which is separated from the slots ($18_5$-$18_8$; $18_{14}$-$18_{17}$), which accommodate four other second connecting bars (44) of the same group, by one slot ($18_9$, $18_{18}$), which accommodates an innermost ($44_I$) second connecting bar of another group (47) of second connecting bars (34) of a 4-coil turn phase belt of another phase winding (22; 24).

4. A stator winding according to claim 3, **characterized in that** the first and second connecting bars (42, 44) are separated, for at least each coil turn (26) comprising a first connecting bar (42) and a second connecting bar (44) of one phase winding in a respective slot adjacent with respectively at least one slot comprising a first connecting bar (42) and a second connecting bar (44) of the same phase winding, by a global coil pitch corresponding to a number of slots (18) equal to 11.

5. A stator winding according to claim 1, **characterized in that** the two phase belts are respectively a 5-coil turn phase belt and a 4-coil turn phase belt, and **in that** each 4-coil turn phase belt (32) of said single phase winding (22) has all its first connecting bars (42) disposed in adjacent slots ($18_1$,$18_2$,$18_{26}$,$18_{27}$) and all its second connecting bars (44) disposed in adjacent slot ($18_{11}$-$18_{14}$).

6. A stator winding according to claim 5, **characterized in that**

   • for each 5-coil turn phase belt (32) of first phase winding (22) :

   - the outermost first connecting bar ($42_0$) is disposed in a slot ($18_{11}$) which is separated from the slots ($18_{13}$-$18_{16}$), which accommodate four other first connecting bars (42) of the same group, by one slot ($18_{12}$), which accommodates an innermost first connecting bar ($42_I$) of another group (46) of first connecting bars of a 4-coil turn phase belt (34) of another phase winding (24), and
   - the outermost second connecting bar ($44_0$) is disposed in a slot ($18_2$) which is separated from the slots ($18_{24}$-$18_{27}$), which accommodate four other second connecting bars (44) of the same group, by one slot ($18_1$), which accommodates an innermost second connecting bar ($44_I$) of another group (47) of second connecting bars of a 4-coil turn phase belt (34) of another phase winding (26),

   • **in that** for each 5-coil turn phase belt (32) of a second phase winding (24) different from the first phase winding :

   - the outermost first connecting bar ($42_0$) is disposed in a slot ($18_{20}$) which is separated from the slots ($18_{22}$-$18_{25}$), which accommodate four other first connecting bars of the same group, by one slot ($18_{21}$), which accommodates an innermost first connecting bar ($42_I$) of another group (46) of first connecting bars of a 4-coil turn phase belt (34) of another phase winding (26), and
   - the innermost second connecting bar ($44_I$) is disposed in a slot ($18_5$) which is separated from the slots ($18_7$-$18_{10}$), which accommodate four other second connecting bars of the same group, by one slot ($18_6$), which accommodates an outermost second connecting bar ($44_0$) of another group (47) of second connecting bars of a 4-coil turn phase belt (34) of another phase winding (26),

   • **in that** for each 5-coil turn phase belt (32) of a third phase winding (26) different from the first and second phase windings:

   - the outermost second connecting bar ($44_0$) is disposed in a slot ($18_{20}$) which is separated from the slots ($18_{15}$-$18_{13}$), which accommodate four other second connecting bars of the same group, by one slot ($18_{19}$), which accommodates an innermost second connecting bar ($44_I$) of another group (47) of second connecting bars of a 4-coil turn phase belt of another phase winding (24), and
   - the innermost first connecting bar ($42_I$) is disposed in a slot ($18_8$) which is separated from the slots ($18_3$-$18_6$), which accommodate four other first connecting bars of the same group, by one slot ($18_7$), which

accommodates an outermost first connecting bar ($42_0$) of another group (46) of first connecting bars (42) of a 4-coil turn phase belt (34) of another phase winding (24).

7. The stator winding (20) according to claim 6 **characterized in that** the first and second connecting bars (42, 44) are separated, for at least each coil turn (36) comprising a first connecting bar (42) and a second connecting bar (44) of one phase winding (22, 24, 26) in a respective slot adjacent with respectively at least one slot comprising a first connecting bar (42) and a second connecting bar (44) of the same phase winding, by a global coil pitch corresponding to a number of slots (18) equal to 12.

8. The stator winding according to any preceding claim **characterized in that** the first layer (28) corresponds to a portion of the stator winding (20) disposed in the bottom of the slots (18) and second layer corresponds to another portion of the stator winding (20) disposed in the top of the slots (18), or conversely.

Fig.1

EP 2 843 807 A2

Fig.2

EP 2 843 807 A2

| | Approximated electrical angular shift with respect to phase winding in slot 1 in first layer | |
|---|---|---|
| Order number of slot 18 | First layer 28 | Second layer 30 |
| $18_1$ | 0 | 300 |
| $18_2$ | 300 | 300 |
| $18_3$ | 0 | 300 |
| $18_4$ | 300 | 300 |
| $18_5$ | 300 | 240 |
| $18_6$ | 300 | 240 |
| $18_7$ | 300 | 240 |
| $18_8$ | 240 | 240 |
| $18_9$ | 240 | 180 |
| $18_{10}$ | 240 | 240 |
| $18_{11}$ | 240 | 180 |
| $18_{12}$ | 180 | 180 |
| $18_{13}$ | 180 | 180 |
| $18_{14}$ | 180 | 120 |
| $18_{15}$ | 180 | 120 |
| $18_{16}$ | 180 | 120 |
| $18_{17}$ | 120 | 120 |
| $18_{18}$ | 120 | 60 |
| $18_{19}$ | 120 | 120 |
| $18_{20}$ | 60 | 60 |
| $18_{21}$ | 120 | 60 |
| $18_{22}$ | 60 | 60 |
| $18_{23}$ | 60 | 0 |
| $18_{24}$ | 60 | 0 |
| $18_{25}$ | 60 | 0 |
| $18_{26}$ | 0 | 0 |
| $18_{27}$ | 0 | 0 |

**Fig.3**

| Order number of slot 18 | Approximated electrical angular shift with respect to phase winding in slot 1 in first layer | |
|---|---|---|
| | First layer 28 | Second layer 30 |
| $18_1$ | 0 | 300 |
| $18_2$ | 0 | 0 |
| $18_3$ | 300 | 300 |
| $18_4$ | 300 | 300 |
| $18_5$ | 300 | 240 |
| $18_6$ | 300 | 300 |
| $18_7$ | 240 | 240 |
| $18_8$ | 300 | 240 |
| $18_9$ | 240 | 240 |
| $18_{10}$ | 240 | 240 |
| $18_{11}$ | 180 | 180 |
| $18_{12}$ | 240 | 180 |
| $18_{13}$ | 180 | 180 |
| $18_{14}$ | 180 | 180 |
| $18_{15}$ | 180 | 120 |
| $18_{16}$ | 180 | 120 |
| $18_{17}$ | 120 | 120 |
| $18_{18}$ | 120 | 120 |
| $18_{19}$ | 120 | 60 |
| $18_{20}$ | 60 | 120 |
| $18_{21}$ | 120 | 60 |
| $18_{22}$ | 60 | 60 |
| $18_{23}$ | 60 | 60 |
| $18_{24}$ | 60 | 0 |
| $18_{25}$ | 60 | 0 |
| $18_{26}$ | 0 | 0 |
| $18_{27}$ | 0 | 0 |

Fig.4

Fig.5

| Order number of slot 18 | Approximated electrical angular shift with respect to phase winding in slot 1 in first layer | |
| --- | --- | --- |
| | First layer 28 | Second layer 30 |
| $18_1$ | 0 | 300 |
| $18_2$ | 0 | 300 |
| $18_3$ | 300 | 300 |
| $18_4$ | 300 | 300 |
| $18_5$ | 300 | 240 |
| $18_6$ | 300 | 240 |
| $18_7$ | 300 | 240 |
| $18_8$ | 240 | 240 |
| $18_9$ | 240 | 240 |
| $18_{10}$ | 240 | 180 |
| $18_{11}$ | 240 | 180 |
| $18_{12}$ | 180 | 180 |
| $18_{13}$ | 180 | 180 |
| $18_{14}$ | 180 | 120 |
| $18_{15}$ | 180 | 120 |
| $18_{16}$ | 180 | 120 |
| $18_{17}$ | 120 | 120 |
| $18_{18}$ | 120 | 120 |
| $18_{19}$ | 120 | 60 |
| $18_{20}$ | 120 | 60 |
| $18_{21}$ | 60 | 60 |
| $18_{22}$ | 60 | 60 |
| $18_{23}$ | 60 | 0 |
| $18_{24}$ | 60 | 0 |
| $18_{25}$ | 60 | 0 |
| $18_{26}$ | 0 | 0 |
| $18_{27}$ | 0 | 0 |

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2503673 A